# EUROPEAN PATENT SPECIFICATION

(11) **EP 3 392 629 B1**
(45) Date of publication and mention of the grant of the patent: **18.08.2021**
(21) Application number: 18167920.0
(22) Date of filing: 18.04.2018
(51) Int. Cl.: G01G 23/00, G01G 19/393

(54) **WEIGHING APPARATUS AND LIMIT ADJUSTMENT PORTION**
WIEGEVORRICHTUNG UND GRENZWERTEINSTELLUNG
APPAREIL DE PESAGE ET PARTIE DE RÉGLAGE DE LIMITE

(30) Priority: 19.04.2017 JP 2017082671
(43) Date of publication of application: 24.10.2018
(73) Proprietor: Ishida Co., Ltd., Kyoto 606-8392 (JP)
(72) Inventor: Kageyama, Toshiharu, Shiga, 520-3026 (JP)
(74) Representative: Gill Jennings & Every LLP

(56) References cited:
- US-A- 5 923 000

## Description

### BACKGROUND

### Technical Field

The present invention relates to a weighing apparatus and a limit adjustment portion.

### Related Art

In a load cell-type weighing apparatus, a limit mechanism is mounted to suppress an overload to a load cell. Such a limit mechanism is a mechanism for suppressing deformation of the load cell by a load beyond a movable range in which the load cell is originally deformable. Typically, such a limit mechanism is configured to obtain an appropriate movable range by performing adjustment with a screw mechanism or the like after incorporating the load cell in a weighing mechanism. Here, the movable range of the load cell is as small as less than ±0.1 mm, for example, and there is a problem that the adjustment with the screw mechanism requires very delicate adjustment.

To solve the problem, the technology described in Japanese Utility Model No. 2500299 realizes the delicate adjustment by forming the limit mechanism with sheet metal parts and reducing the adjustment with the screw by a lever ratio.

Further, in the conventional load cell-type weighing apparatus, it is not effective to support the limit mechanism at a single point against a moment load that twists a tare portion, which is not in an original load direction (that is, in a vertical direction) of the load cell, resulting in damage to the load cell.

To solve the problem, the technology described in Japanese Utility Model No. 2554826 is configured to function when deformation of the load cell due to the above-described moment load occurs by causing a limit to have a cylindrical shape and to be positioned between two planes.

US-A-5923000 describes a shock protection device for a force measuring apparatus, particularly a balance, which includes a material block with a stationary parallelogram side member, a deflectable parallelogram side member serving for receiving the force to be measured, two guide members which are bending-elastic in the plane of the parallelogram and which connect the two parallelogram side members, and at least one lever which is connected through a coupling member to the deflectable parallelogram side member. The shock protection device includes a safety bolt inserted into a bore extending at least partially through the force measuring apparatus, wherein the safety bolt is connected without play to one of the components forming the force measuring apparatus, while the safety bolt has radial play relative to the remaining components through which the bolt extends.

### SUMMARY

However, in the technology described in Japanese Utility Model No. 2500299, the plate metal parts cannot bear the load as a corresponding load becomes large. Therefore, there is a problem that the technology described in Japanese Utility Model No. 2500299 cannot be used for application where a large load is applied such as a combination weighing apparatus.

Further, according to the technology described in Japanese Utility Model No. 2554826, it is difficult to adopt an adjustment type and it is necessary to enhance parts accuracy and eliminate a limit function, leading to an increase in cost.

Therefore, the present invention has been made to solve the above-described problems, and an objective of the present invention is to provide a weighing apparatus and a limit adjustment portion that enable appropriate and easy adjustment of a limit mechanism while having high resistance to a moment load to a load cell.

According to claim 1, the present invention is a weighing apparatus configured to weigh a mass value of an article, using a Roberval mechanism, the weighing apparatus including a load cell, a limit adjustment portion including a long first member and a long second member, a first support portion that is a member connected to a free end side of the load cell and through which the second member passes, and a second support portion that is a member connected to a fixed end side of the load cell and a main body of the weighing apparatus, and includes a hole into which the first member is fit, characterized in that the weighing apparatus is configured such that when the second member is rotated, a space formed in an approximately vertical direction between the first member and the hole is changed in conjunction with the rotation, whereby
a movement in the approximately vertical direction of the limit adjustment portion in response to that mass value of an article applied to the load cell is restricted by the hole.

According to the present invention, a weighing apparatus and a limit adjustment portion that enable appropriate and easy adjustment of a limit mechanism while having high resistance to a moment load to a load cell can be provided.

### BRIEF DESCRIPTION OF DRAWINGS

FIG. 1 is a view illustrating an example of an external form of a weighing apparatus according to a first embodiment;
FIG. 2 is a schematic view of a cutout portion A in FIG. 1;
FIG. 3 is a view illustrating an example of an external form of a portion B in FIG. 2 removed from a main body of the weighing apparatus;
FIG. 4 is a view of FIG. 3 as viewed from a direction D1;
FIG. 5 is a view of FIG. 3 as viewed from a direction D2;
FIG. 6 is a view illustrating an example of a limit adjustment portion that constitutes the weighing apparatus according to the first embodiment;
FIGS. 7a to 7d are views of FIG. 6 as viewed from a direction D3;
FIGS. 8a and 8b are views illustrating examples of a limit adjustment portion that constitutes a weighing apparatus according to a first modification; and
FIGS. 9a and 9b are views illustrating an example of a limit adjustment portion that constitutes a weighing apparatus according to a second modification.

### DETAILED DESCRIPTION

Hereinafter, an embodiment will be described in detail with reference to the drawings as appropriate. Note that detailed description more than necessary may be omitted. For example, detailed description of already known matters and redundant description of substantially the same configuration may be omitted. This is to avoid unnecessary redundancy of the following description and to facilitate understanding by those skilled in the art.

Note that the inventor provides the accompanying drawings and the following description to enable those skilled in the art to sufficiently understand the present disclosure, and does not intend to limit the subject matter recited in the claims by these provided drawings and description.

### (First Embodiment)

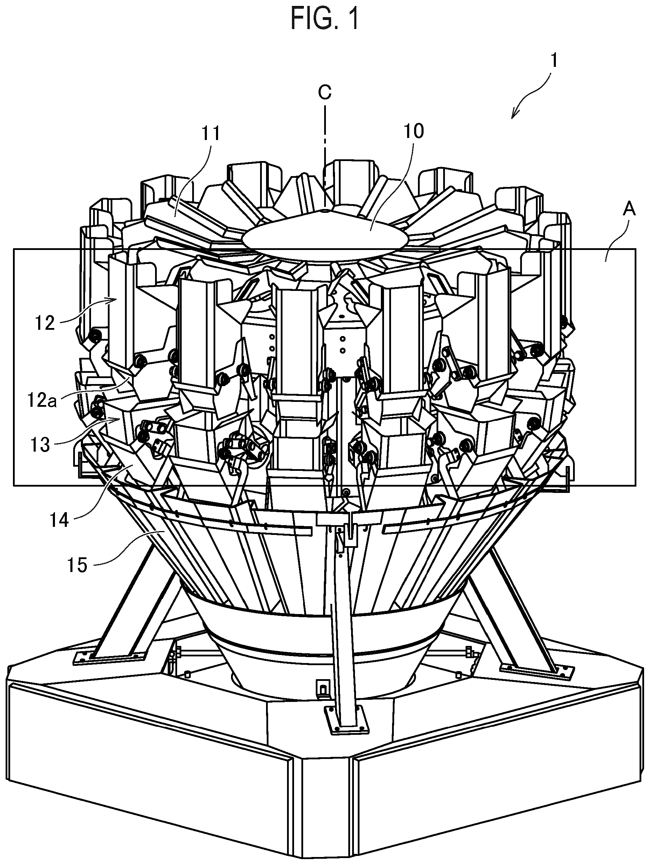

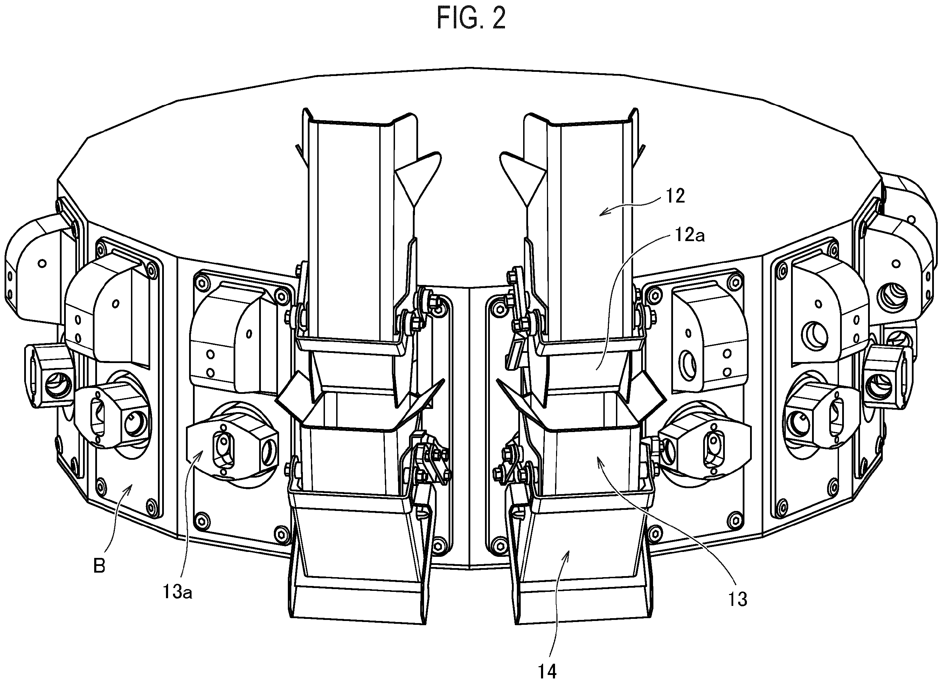

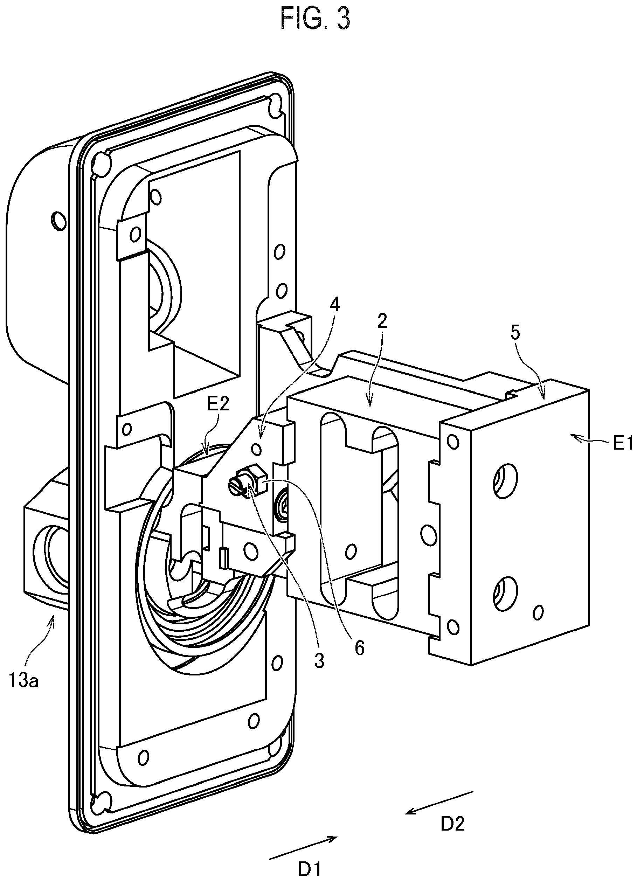

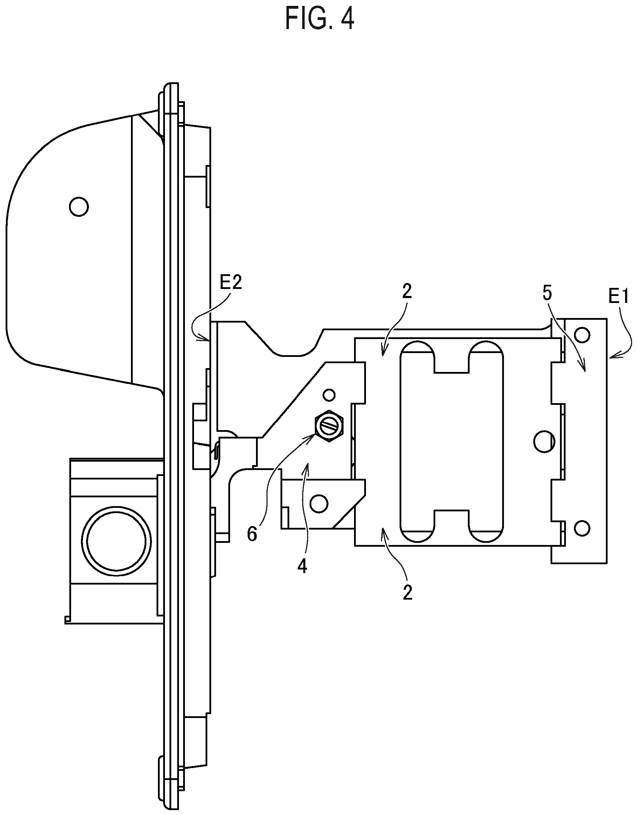

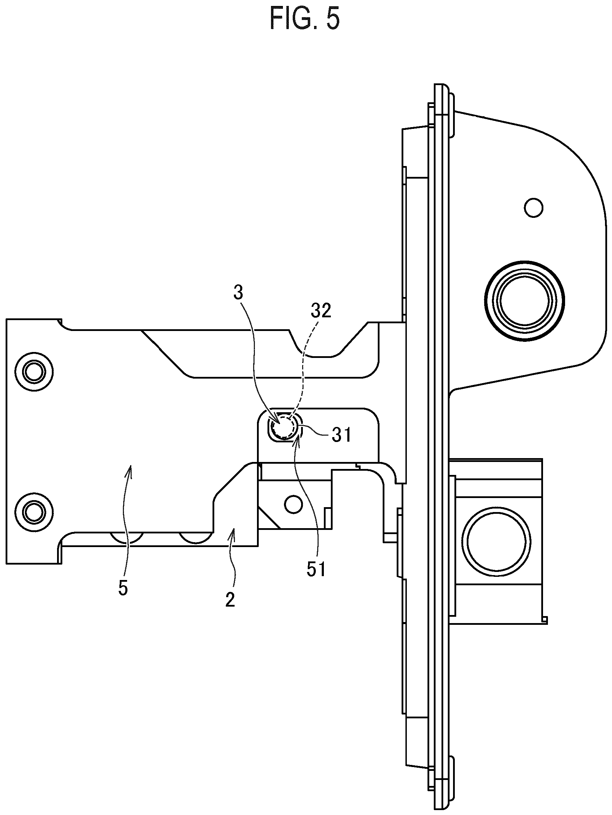

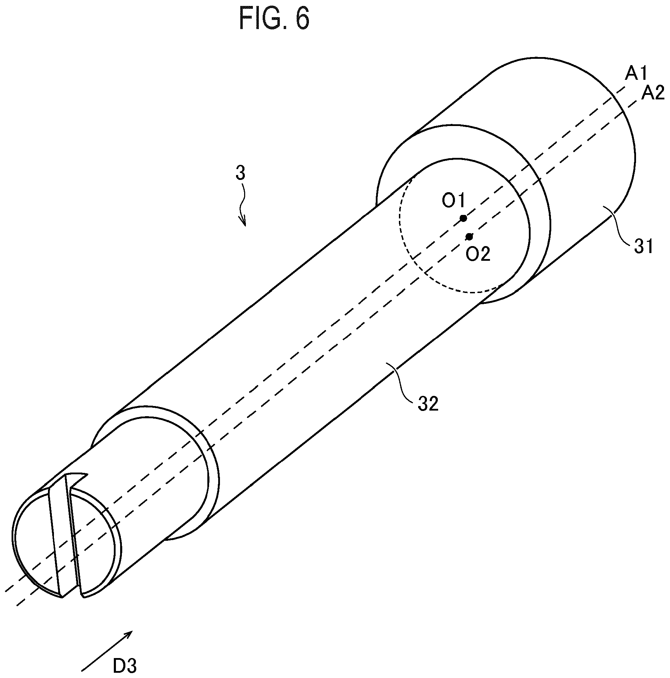

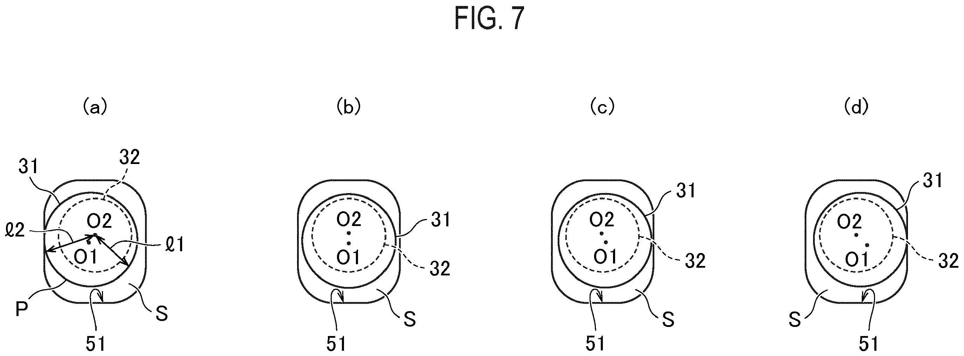

Hereinafter, a weighing apparatus 1 according to a first embodiment of the present invention will be described with reference to FIG. 1 to FIGS. 7a to 7d. FIG. 1 is a view illustrating an example of an external form of a weighing apparatus 1 according to the first embodiment of the present invention, FIG. 2 is a schematic view of a cutout portion A in FIG. 1, FIG. 3 is a view illustrating an example of an external form of a portion B in FIG. 2 removed from a main body of the weighing apparatus 1, FIG. 4 is a view of FIG. 3 as viewed from a direction D1, FIG. 5 is a view of FIG. 3 as viewed from a direction D2, FIG. 6 is a view illustrating an example of a limit adjustment portion that constitutes the weighing apparatus 1 according to the first embodiment, and FIGS. 7A to 7D are views of FIG. 6 as viewed from a direction D3.

The weighing apparatus 1 according to the present embodiment is a weighing apparatus configured to measure a mass value of an article, using a Roberval mechanism, and as illustrated in FIGS. 1 and 2, the weighing apparatus 1 includes a dispersion table 10, a supply trough 11, a pool hopper 12, a weighing hopper 13, a booster hopper 14, and a collect and discharge chute 15.

The dispersion table 10 is configured to disperse objects to be weighed dropping from a supply device (not illustrated) toward the supply trough 11. For example, the dispersion table 10 in the present embodiment is configured to convey the objects to be weighed outward in a radial direction while dispersing the objects to be weighed in a circumferential direction by being driven and rotated around a rotation axis C extending in an up-down direction. However, the dispersion table 10 is not limited to the configuration, and any configuration may be adopted as long as the configuration has a function to convey the objects to be weighed toward the supply trough 11. For example, the object to be weighed is soft and sticky food such as raw poultry. However, the object to be weighed is not limited to the food.

The supply trough 11 is configured to supply the object to be weighed supplied from the dispersion table 10 to the pool hopper 12 provided corresponding downstream.

The pool hopper 12 is configured to temporarily retain the object to be weighed supplied from the supply trough 11. A gate 12a is provided in a lower part of the pool hopper 12, and the object to be weighed retained in the pool hopper 12 is discharged to the weighing hopper 13 provided under the gate 12a by an opening/closing operation of the gate 12a.

The weighing hopper 13 is configured to temporarily retain the object to be weighed discharged by the pool hopper 12. As illustrated in FIG. 2, the weighing hopper 13 is connected to a mass detector 13a. A specific configuration of the mass detector 13a will be described below.

Further, a gate (not illustrated) is provided in a lower part of the weighing hopper 13, and the object to be weighed retained in the weighing hopper 13 is discharged to the booster hopper 14 arranged under the gate by an opening/closing operation of the gate.

The booster hopper 14 is configured to accommodate the object to be weighed supplied from the weighing hopper 13 and temporarily hold the object to be weighed. A gate (not illustrated) is provided in a lower part of the booster hopper 14, and the object to be weighed retained in the booster hopper 14 is discharged to the collect and discharge chute 15 arranged under the gate by an opening/closing operation of the gate.

The collect and discharge chute 15 is configured to collect the objects to be weighed discharged from the plurality of booster hoppers 14 and drop the objects to be weighed downward.

Hereinafter, a specific configuration of the mass detector 13a will be described with reference to FIG. 3 to FIGS. 7a to 7d.

When the object to be weighed is thrown into the weighing hopper 13, distortion occurs in the mass detector 13a. The mass detector 13a is configured to be able to detect a mass value of the object to be weighed thrown into the weighing hopper 13 on the basis of a signal based on the distortion.

To be specific, as illustrated in FIGS. 3 to 5, the mass detector 13a includes a load cell 2, a limit adjustment portion 3, a first support portion 4, and a second support portion 5.

As illustrated in FIG. 6, the limit adjustment portion 3 has a long first member 31 and a long second member 32. As illustrated in FIGS. 3 and 4, the portion of the second member 32 of the limit adjustment portion 3 is fixed to the first support portion 4 with a nut 6 and the like.

As illustrated in FIGS. 3 and 4, the first support portion 4 is a member connected to a free end E2 side of the load cell 2, and is configured to have the above-described second member 32 pass therethrough.

As illustrated in FIGS. 3 to 5, the second support portion 5 is a member connected to a fixed end E1 side of the load cell 2 and the main body of the weighing apparatus 1, and has a hole 51 into which the above-described first member 31 is fit.

Here, in the weighing apparatus 1 according to the present embodiment, when the second member 32 is rotated, a space (gap) S formed between the first member 31 and the hole 51 is changed in conjunction with the rotation, as illustrated in FIGS. 7a to 7d.

In other words, in the weighing apparatus 1 according to the present embodiment, as illustrated in FIGS. 7a to 7d, distances (for example, 11 and 12) between a center 02 of the second member 32 and an outer peripheral edge P of the first member 31 are configured not to be uniform in a cross section of the limit adjustment portion 3 in a plane perpendicular to rotation axes A1 and A2 of the first member 31 and the second member 32.

According to the invention, when the object to be weighed is thrown into the weighing hopper 13, the first support portion 4 and the limit adjustment portion 3 are moved in an appropriately vertical direction, whereas the second support portion 5 is not moved as the second support portion 5 is connected to the main body of the weighing apparatus 1. Therefore, the movement in the approximately vertical direction of the limit adjustment portion 3 is restricted by the hole 51 provided in the second support portion 5. That is, in the case where the limit adjustment portion 3 is rotated about the rotation axis A2 of the second member 32, the space S formed between the first member 31 and the hole 51 is changed. Therefore, a movable range in an approximately vertical direction of the limit adjustment portion 3 can be adjusted, deformation beyond a movable range of the load cell 2 can be easily avoided, and damage to the load cell 2 can be prevented.

To be specific, as illustrated in FIG. 6, the first member 31 and the second member 32 have cylindrical shapes, and as illustrated in FIG. 6 and FIGS. 7a to 7d, a center O1 of the first member 31 is configured to deviate from a center 02 of the second member 32 in the cross section of the limit adjustment portion 3 in the plane perpendicular to the rotation axes A1 and A2 of the first member 31 and the second member 32.

That is, as illustrated in FIG. 6, the direction of the rotation axis A1 of the first member 31 and the direction of the rotation axis A2 of the second member 32 are arranged to be parallel to each other. However, the rotation axis A1 of the first member 31 and the rotation axis A2 of the second member 32 are not concentrically arranged.

According to the invention, as illustrated in FIGS. 7a to 7d, the space S formed between the first member 31 and the hole 51 can be changed by simply rotating the limit adjustment portion 3 about the rotation axis A2 of the second member 32. As a result, the movable range in the approximately vertical direction of the limit adjustment portion 3 can be adjusted.

Note that, in the present embodiment, the case where the mass detector 13a is connected only to the weighing hopper 13 has been described as an example. However, the present invention is not limited to the case and is applicable to a case where a mass detector is connected not only to the weighing hopper 13 but also to the booster hopper 14 and the pool hopper 12.

According to the weighing apparatus 1 of the present embodiment, the limit mechanism can be appropriately and easily adjusted while having high resistance to the moment load to the load cell 2.

### (First Modification)

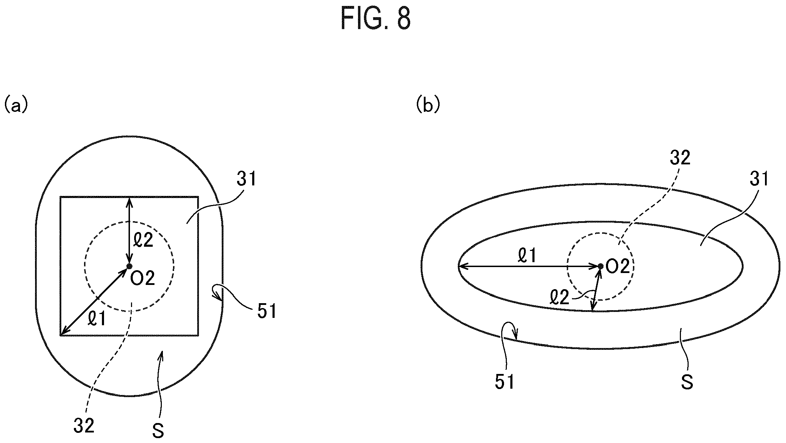

Hereinafter, a first modification of the present invention will be described focusing on difference from the weighing apparatus 1 according to the above-described first embodiment with reference to FIGS. 8a and 8b.

As illustrated in FIG. 8a, in a weighing apparatus 1 according to the present modification, a cross section of a first member 31 in a plane perpendicular to a rotation axis A1 of the first member 31 may have a rectangular shape, and a cross section of a second member 32 in a plane perpendicular to a rotation axis A2 of the second member 32 may have a circular shape.

Alternatively, as illustrated in FIG. 8b, in the weighing apparatus 1 according to the present modification, the cross section of the first member 31 in the plane perpendicular to the rotation axis A1 of the first member 31 and the cross section of the second member 32 in the plane perpendicular to the rotation axis A2 of the second member 32 may have elliptical shapes.

According to these configurations, distances (for example, 11 and 12) between a center 02 of the second member 32 and an outer peripheral edge P of the first member 31 are not uniform in the cross section of a limit adjustment portion 3 in the plane perpendicular to the rotation axes A1/A2 of the first member 31 and the second member 32. Therefore, a space S formed between the first member 31 and a hole 51 can be changed by simply rotating the limit adjustment portion 3 about the rotation axis A2 of the second member 32. As a result, a movable range in an approximately vertical direction of the limit adjustment portion 3 can be adjusted.

Note that the sectional shape of the limit adjustment portion 3 in the plane perpendicular to the rotation axes A1 and A2 of the first member 31 and the second member 32 is not limited to the above-described case, and any sectional shape can be adopted as long as the sectional shape is configured such that, when the second member 32 is rotated, the space (gap) S formed between the first member 31 and the hole 51 is changed in conjunction with the rotation.

### (Second Modification)

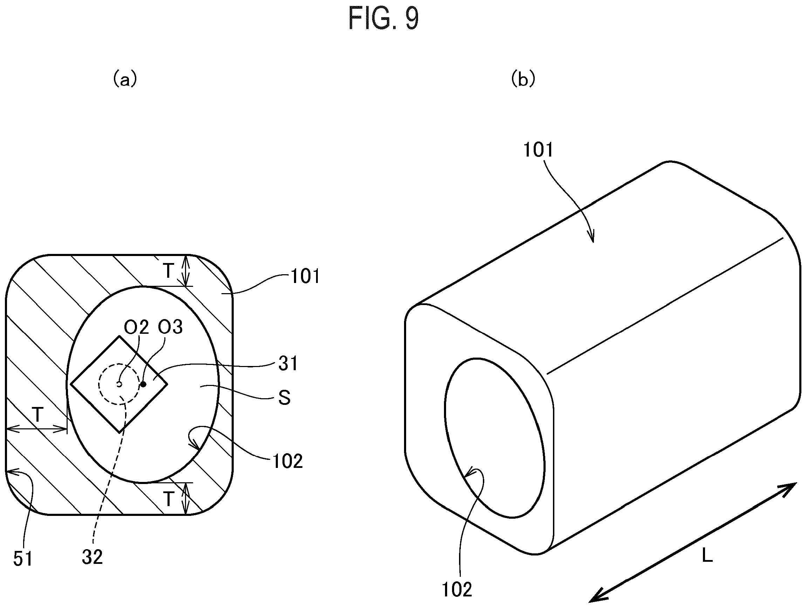

Hereinafter, a second modification of the present invention will be described focusing on difference from the weighing apparatus 1 according to the above-described first modification with reference to FIGS. 9a and 9b.

As illustrated in FIGS. 9A and 9B, a weighing apparatus 1 according to the present modification has a long third member 101 configured to be fit into a hole 51 of a second support portion 5.

To be specific, as illustrated in FIGS. 9A and 9B, the third member 101 is provided with a hole 102 extending in a longitudinal direction L of the third member 101, and the third member 101 has a hollow cylindrical shape.

Here, a thickness T of the third member 101 is not uniform, as illustrated in FIG. 9A. In other words, as illustrated in FIG. 9A, a center O1 of a first member 31 and a center O2 of a second member 32 are configured to deviate from a center 03 of the hole 102 of the third member 101 (that is, a center with respect to an inner periphery of the third member) in a cross section of a limit adjustment portion 3 in a plane perpendicular to rotation axes A1 and A2 of the first member 31 and the second member 32. Note that a center of the third member 101 (that is, a center with respect to an outer periphery of the third member 101) in the cross section of the limit adjustment portion 3 in the plane perpendicular to the rotation axes A1 and A2 of the first member 31 and the second member 32 is configured to accord with the center O1 of the first member 31 and the center 02 of the second member 32.

Further, the third member 101 is configured to be able to rotate in a state of being fit in the hole 51.

In the present modification, a cross section of the first member 31 in the plane perpendicular to the rotation axis A1 of the first member 31 and a cross section of the second member 32 in the plane perpendicular to the rotation axis A2 of the second member 32 may have the shapes illustrated in FIG. 8a or the shapes illustrated in FIG. 8b.

According to these configurations, a movable range in an approximately vertical direction of the limit adjustment portion 3 can be adjusted while changing a space S formed between the first member 31 and the hole 102 by rotating the third member 101 in a state where the third member 101 is fit in the hole 51.

### (Other Embodiments)

As described above, the present invention has been described with the embodiment. It should not be understood that the description and drawings constituting a part of the disclosure in such an embodiment limit the present invention. Various alternative embodiments, examples, and operational techniques will be apparent from the disclosure to those skilled in the art.

## Claims

1. A weighing apparatus configured to weigh a mass value of an article, using a Roberval mechanism, the weighing apparatus comprising:
a load cell (2);
a limit adjustment portion (3) including a first member (31) and a second member (32);
a first support portion (4) that is a member connected to a free end side of the load cell (2) and through which the second member (32) passes; and
a second support portion (5) that is a member connected to a fixed end side of the load cell (2) and a main body of the weighing apparatus, and includes a hole (51) into which the first member (31) is fit, **characterized in that** the weighing apparatus is configured such that
when the second member (32) is rotated, a space (S) formed in an approximately vertical direction between the first member (31) and the hole (51) is changed in conjunction with the rotation, whereby
a movement in the approximately vertical direction of the limit adjustment portion (3) in response to the mass value of an article applied to the load cell is restricted by the hole (51).

2. The weighing apparatus according to claim 1, wherein
the first member (31) and the second member (32) have a cylindrical shape, and
a center (01) of the first member (31) is configured to deviate from a center (02) of the second member (32) in a cross section of the limit adjustment portion in a plane perpendicular to rotation axes of the first member and the second member.

3. The weighing apparatus according to claim 1, wherein
a cross section of the first member (31) in a plane perpendicular to a rotation axis of the first member has a rectangular shape, and
a cross section of the second member (32) in a plane perpendicular to a rotation axis of the second member has a circular shape.

4. The weighing apparatus according to claim 1, wherein a cross section of the first member (31) in a plane perpendicular to a rotation axis of the first member and a cross section of the second member (32) in a plane perpendicular to a rotation axis of the second member have an elliptical shape.

5. The weighing apparatus according to claim 3 or 4, wherein
the limit adjustment portion (3) further includes a third member (101) configured to be fit into the hole (51), and
a center of a hole (102) of the third member (101) is configured to deviate from a center of the first member and a center of the second member in a cross section of the limit adjustment portion in a plane perpendicular to the rotation axes of the first member and the second member.

## Patentansprüche

1. Wiegegerät, konfiguriert zum Wiegen eines Wiegewertes eines Artikels, unter Verwenden eines Roberval-Mechanismus, das Wiegegerät umfassend:
einen Kraftaufnehmer (2);
einen Begrenzungseinstellabschnitt (3), der ein erstes Element (31) und ein zweites Element (32) beinhaltet;
einen ersten Stützabschnitt (4), der ein Element (10) ist, das mit einer freien Endseite des Kraftaufnehmers (2) verbunden ist und durch das das zweite Element (32) verläuft; und
einen zweiten Stützabschnitt (5), der ein Element ist, das mit einer festen Endseite des Kraftaufnehmers (2) und einem Hauptkörper des Wiegegeräts verbunden ist, und ein Loch (51) beinhaltet, in das das erste Element (31) eingepasst ist, **dadurch gekennzeichnet, dass** das Wiegegerät so konfiguriert ist, dass wenn das zweite Element (32) gedreht wird, ein Raum (S), der in einer ungefähr vertikalen Richtung zwischen dem ersten Element (31) und dem Loch (51) gebildet wird, in Verbindung mit der Drehung verändert wird, wodurch
eine Bewegung des Begrenzungseinstellungsabschnitts (3) in der ungefähr vertikalen Richtung als Reaktion auf den Massenwert eines Artikels, der auf den Kraftaufnehmer aufgebracht wird, durch das Loch (51) eingeschränkt wird.

2. Wiegegerät gemäß Anspruch 1, wobei
das erste Element (31) und das zweite Element (32) eine zylindrische Form aufweisen, und
ein Zentrum (O1) des ersten Elements (31) konfiguriert ist, um von einem Zentrum (O2) des zweiten Elements (32) in einem Querschnitt des Begrenzungseinstellungsabschnitts in einer Ebene senkrecht zu Drehachsen des ersten Elements und des zweiten Elements abzuweichen.

3. Wiegegerät gemäß Anspruch 1, wobei
ein Querschnitt des ersten Elements (31) in einer Ebene senkrecht zu einer Drehachse des ersten Elements eine rechteckige Form aufweist, und
ein Querschnitt des zweiten Elements (32) in einer Ebene senkrecht zu einer Drehachse des zweiten Elements eine kreisförmige Form aufweist.

4. Wiegegerät gemäß Anspruch 1, wobei
ein Querschnitt des ersten Elements (31) in einer Ebene senkrecht zu einer Drehachse des ersten Elements und ein Querschnitt des zweiten Elements (32) in einer Ebene senkrecht zu einer Drehachse des zweiten Elements eine elliptische Form aufweisen.

5. Wiegegerät gemäß Anspruch 3 oder 4, wobei
der Begrenzungseinstellungsabschnitt (3) ferner ein drittes Element (101) beinhaltet, das konfiguriert ist, um in das Loch (51) eingepasst zu werden, und
ein Zentrum eines Lochs (102) des dritten Elements (101) konfiguriert ist, um von einem Zentrum des ersten Elements und einem Zentrum des zweiten Elements in einem Querschnitt des Begrenzungseinstellungsabschnitts in einer Ebene senkrecht zu den Drehachsen des ersten Elements und des zweiten Elements abzuweichen.

## Revendications

1. Appareil de pesage configuré de façon à peser une valeur de masse d'un article, en utilisant un mécanisme Roberval, cet appareil de pesage comprenant :
une cellule de charge (2) ;
une partie de réglage de limite (3) comprenant un premier élément (31) et un deuxième élément (32) ;
une première partie de support (4) qui est un élément rattaché à un côté extrémité libre de la cellule de charge (2) et à travers laquelle le deuxième élément (32) passe ; et
une deuxième partie de support (5) qui est un élément rattaché à un côté extrémité fixe de la cellule de charge (2) et à un corps principal de l'appareil de pesage, et qui comporte un trou (51) dans lequel le premier élément (31) est monté, **caractérisé en ce que** cet appareil de pesage est configuré de manière à ce que,
lorsque le deuxième élément (32) est tourné, un espace (S) formé dans une direction à peu près verticale entre le premier élément (31) et le trou (51) soit changé en conjonction avec la rotation, comme quoi
un mouvement dans la direction à peu près verticale de la partie de réglage de limite (3) en réponse à la valeur de masse d'un article appliqué sur la cellule de charge soit restreint par le trou (51).

2. Appareil de pesage selon la revendication 1, dans lequel
le premier élément (31) et le deuxième élément (32) ont une forme cylindrique, et
un centre (01) du premier élément (31) est configuré de façon à s'écarter d'un centre (02) du deuxième élément (32) dans une section transversale de la partie de réglage de limite dans un plan perpendiculaire aux axes de rotation du premier élément et du deuxième élément.

3. Appareil de pesage selon la revendication 1, dans lequel
une section transversale du premier élément (31) dans un plan perpendiculaire à un axe de rotation du premier élément a une forme rectangulaire, et
une section transversale du deuxième élément (32) dans un plan perpendiculaire à un axe de rotation du deuxième élément a une forme circulaire.

4. Appareil de pesage selon la revendication 1, dans lequel une section transversale du premier élément (31) dans un plan perpendiculaire à un axe de rotation du premier élément et une section transversale du deuxième élément (32) dans un plan perpendiculaire à un axe de rotation du deuxième élément ont une forme elliptique.

5. Appareil de pesage selon la revendication 3 ou 4, dans lequel
la partie de réglage de limite (3) comprend en outre un troisième élément (101) configuré de façon à être monté dans le trou (51), et
un centre d'un trou (102) de ce troisième élément (101) est configuré de façon à s'écarter d'un centre du premier élément et d'un centre du deuxième élément dans une section transversale de la partie de réglage de limite dans un plan perpendiculaire aux axes de rotation du premier élément et du deuxième élément.
